# EUROPÄISCHE PATENTSCHRIFT

(11) **EP 2 276 963 B1**
(45) Veröffentlichungstag und Bekanntmachung des Hinweises auf die Patenterteilung: **08.02.2012**
(21) Anmeldenummer: 09716820.7
(22) Anmeldetag: 05.03.2009
(51) Int. Cl.: F16N 13/16, F16N 13/22, F16N 13/02

(54) **VORRICHTUNG ZUM DOSIERTEN AUSGEBEN EINER SCHMIERFLÜSSIGKEIT**
DEVICE FOR THE METERED DISCHARGE OF A LUBRICANT LIQUID
DISPOSITIF DE DISTRIBUTION DOSÉE D'UN LIQUIDE LUBRIFIANT

(30) Priorität: 07.03.2008 DE 102008013235
(43) Veröffentlichungstag der Anmeldung: 26.01.2011
(73) Patentinhaber: AB SKF, 415 50 Göteborg (SE)
(72) Erfinder: KREUZKÄMPER, Jürgen, 10405 Berlin (DE); HESS, Dieter, 67245 Lambsheim (DE); LAMBE, Stefan, 69488 Birkenau (DE); RUITER, Jan, 68723 Schwetzingen (DE)
(74) Vertreter: Kohl, Thomas
(86) Internationale Anmeldenummer: PCT/EP2009/001544
(87) Internationale Veröffentlichungsnummer: WO 2009/109380

(56) Entgegenhaltungen:
- WO-A-02/090729
- WO-A-2007/090508
- WO-A-2009/015666
- FR-A- 965 594

## Beschreibung

Die Erfindung betrifft eine Vorrichtung zum dosierten Ausgeben einer Schmierflüssigkeit.

Beispielsweise aus der WO 02/090729 A1 ist ein Schmierpumpenaggregat bekannt, das eine Grundplatte umfasst, an der ein Steuerventil mit Schaltmagneten und eine Pumpenbaueinheit angebracht sind.

Eine Aufgabe der Erfindung ist es, eine verbesserte Vorrichtung zum dosierten Ausgeben von Schmierflüssigkeit zu schaffen, die insbesondere besonders kompakt ausbildbar ist.

Die Aufgabe wird durch den Gegenstand des Anspruchs 1 gelöst. Vorteilhafte Ausgestaltungen sind in den Unteransprüchen beschrieben.

Gemäß Anspruch 1 beinhaltet eine Vorrichtung zum dosierten Ausgeben einer Schmierflüssigkeit folgende Merkmale:
- Ein Grundträger mit Kanälen für eine Schmier- und eine Hydraulikflüssigkeit und mit Anschlüssen für Leitungen der Flüssigkeiten,
- eine Pumpeneinheit mit einem hin- und her bewegbaren Kolbensystem für das dosierte Ausgeben der Schmierflüssigkeit,
- eine Steuereinheit zur Bewegungssteuerung des Kolbensystems mittels der Hydraulikflüssigkeit,
- die Anschlüsse für ein dosiertes Ausgeben der Schmierflüssigkeit sind auf einer Seite des Grundträgers angeordnet, die der Seite gegenüberliegt, an der die Pumpeneinheit mit darauf senkrecht stehender Hin- und Herbewegungsnchtung ihres Kolbensystems befestigt ist, und
- die Steuereinheit an einer Seite des Grundträgers angeordnet ist, die zur Befestigungsseite der Pumpeneinheit in etwa senkrecht stehend augebildet ist.

Dadurch, dass die Schmierölausgabeanschlüsse und die Pumpeneinheit auf gegenüberliegenden Seiten des Grundträgers angeordnet sind, ist es mit besonderem Vorteil möglich, das in den Dosierkammern der Pumpeneinheit befindliche Schmieröl in Richtung des Hin- und Herbewegens eines Kolbensystems der Pumpeneinheit in fast geradliniger oder nur leicht schräger Kanalführung an die Schmierölausgabeanschlüsse auszugeben. Damit ist neben einer besonderen baulichen Kompaktheit der Vorrichtung unter anderem auch eine besondere Dynamik der Schmierölausgabe erzielbar und damit mit besonderem Vorteil ein angepasst an den Takt eines Dieselmotorkolbens abgestimmtes, zeitlich präzises Ausgeben von Schmieröl möglich.

Weitere Vorteile, Merkmale und Einzelheiten der Erfindung ergeben sich aus den im Folgenden beschriebenen Ausführungsbeispielen der Erfindung anhand der Figuren. Dabei zeigen:
- Figur 1: eine Draufsicht auf eine erste Vorrichtung zum dosierten Ausgeben von Schmieröl,
- Figur 2: bezüglich der Draufsicht der Figur 1 eine Frontansicht,
- Figur 3: bezüglich der Draufsicht der Figur 1 eine Ansicht von der rechten Seite,
- Figur 4: eine Draufsicht auf eine zweite Vorrichtung zum dosierten Ausgeben von Schmieröl,
- Figur 5: bezüglich der Draufsicht der Figur 4 eine Frontansicht und
- Figur 6: bezüglich der Draufsicht der Figur 4 eine Ansicht von der rechten Seite.

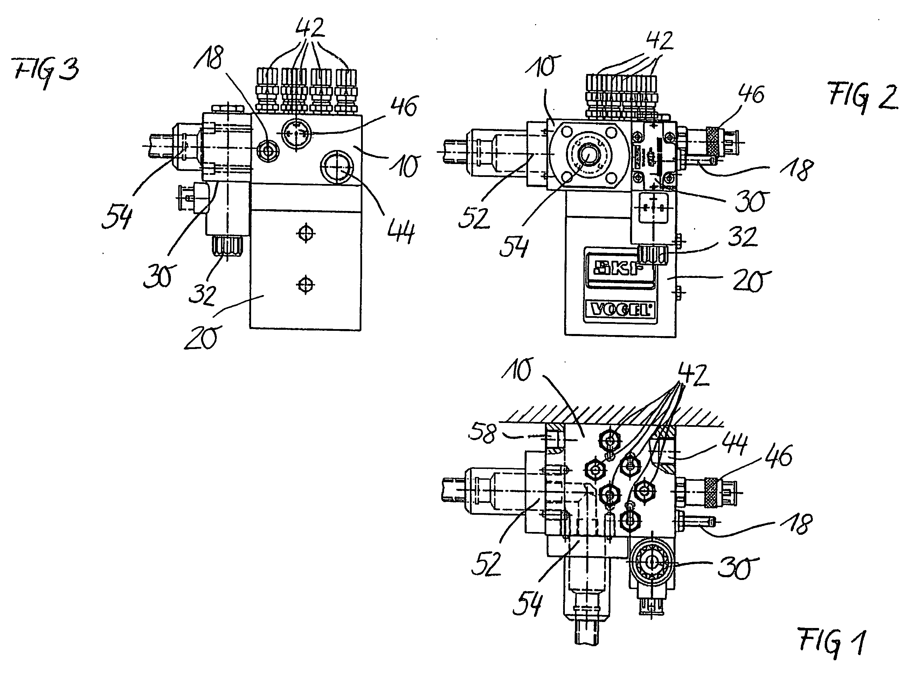

Die Figuren 1 bis 3 zeigen eine erste Vorrichtung zum dosierten Ausgeben von Schmieröl. Dabei umfasst die Vorrichtung einen quader- oder plattenförmigen Grundträger 10 sowie eine daran befestigte Pumpeneinheit 20 und eine Steuereinheit 30. Bezogen auf die Draufsicht der Figur 1 umfasst der Grundträger 10 auf seiner Oberseite sechs Schmierölausgabeanschlüsse 42 zum daran Anschließen von Schmierölleitungen, die zu entsprechenden Schmierstellen bzw. Schmierstutzen in der Kolbenführung eines Großdieselmotors geführt sind. Dabei wird das Schmieröl bezüglich des Takts des Großdieselmotors taktgenau und fein dosiert ausgegeben. Weiterhin umfasst der Grundträger 10 einen Anschluss 44 zum Zuführen des Schmieröls.

Zum fein dosierten Ausgeben umfasst die Vorrichtung weiterhin die Pumpeneinheit 20, die bezogen auf die Draufsicht der Figur 1 unterhalb des Grundträgers 10 angeordnet ist, wobei die Pumpeneinheit 20 bezogen auf die Figuren 2 und 3 ein von oben nach unten und umgekehrt hin und her bewegbares Kolbensystem umfasst. Dabei umfasst das Kolbensystem einen Arbeitskolben und sechs damit verbundene Dosierkolben, von denen jeweils einer einem Schmierölausgabeanschluss 42 zum dosierten Ausgeben des Schmieröls zugehört. Der Grundträger 10 und die Pumpeneinheit 20 sind dabei derart ausgebildet, dass vom Schmierölzuführanschluss 44 ein Kanal zu einer in der Pumpeneinheit 20 gebildeten Ringkammer und damit verbundener Dosierkammern führt, wobei bei einem Hin- und Herbewegen der Arbeits- und Dosierkolben das in den Dosierkammern enthaltene Schmieröl an den Schmierölausgabeanschlüssen 42 ausgegeben wird. In anderen Ausführungsformen sind natürlich auch mehr oder weniger als die sechs Schmierölausgabeanschlüsse 42 und die sechs Dosierkolben möglich.

Der Arbeitskolben wird dabei derart hin und her bewegt, dass er in die eine und auch in die andere Richtung über ein Hydrauliköl druckbeaufschlagt wird. Mit besonderem Vorteil für eine Dynamik des Ausgebens des Schmieröls arbeitet das Kolbensystem damit frei von Rückstellfedern. Für besagtes Hin- und Herbewegen des Kolbensystems umfasst die Vorrichtung zwei Hydraulikanschlüsse 52 und 54 zum Zu- und Durchleiten des Hydrauliköls. Zusätzlich verfügt der Grundträger 10 über einen Anschluss 58 für ein Abführen von Hydrauliköl zu einem Tank. Weiterhin umfasst die Vorrichtung besagte Steuereinheit 30 mittels derer Hydrauliköl derart dem Arbeitskolben zugeführt wird, dass er sich in die eine oder andere Richtung bewegt. Die Steuereinheit 30 umfasst dabei insbesondere ein 4/2-Wege-Richtungssteuer-ventil. Weiterhin umfasst die Steuereinheit 30 eine Betätigungseinrichtung 32 zur Handbetätigung einer Zwischenschmierung. Am Grundträger 10 ist ferner eine Absperrspindel 18 vorgesehen, mit der die Ölführung derart absperrbar ist, dass ein Austausch von Komponenten der Vorrichtungen, insbesondere der Pumpeneinheit 20 und des 4/2-Wege-Richtungssteuerventils, ohne ein Abschalten des Großdieselmotors möglich ist. Ferner umfasst der Grundträger 10 eine Anschlussmöglichkeit für einen beispielsweise als einen Druckschalter 46 ausgebildeten Sensor zum Erfassen eines Druck-Zeit-Verlaufs an wenigstens einer der Ausgaben für das Schmieröl; der Druckschalter 46 dient damit sozusagen zur Drucküberwachung bzw. Funktions- und Kennfeldüberwachung.

Die Hydraulikanschlüsse 52 und 54 sind zum Anschluss von doppelwandig ausgebildeten Hydraulikleitungen ausgebildet. In diesem Zusammenhang kann die Vorrichtung, insbesondere der Grundträger 10 ferner zum Hindurchleiten eines sich ggf. zwischen den beiden Wandungen der doppelwandigen Leitungen ausbildenden Hydraulikölleckage ausgebildet sein und Überwachungsmittel für eine zentrale Leckageüberwachung umfassen. Somit können Leckagestellen im Hydraulikölkreis mit Vorteil an einer zentralen Stelle detektiert werden.

Näheres zu den einzelnen Komponenten, insbesondere der Pumpeneinheit 20 und der Steuereinheit 30 sowie der Betriebsweise der Vorrichtung ist dabei beispielsweise in der WO 02/090729 A1 beschrieben.

Die Vorrichtung gemäß den Figuren zeichnet sich dabei insbesondere durch einen hohen Kompaktheitsgrad aus. Dadurch, dass die Schmierölausgabeanschlüsse 42 und die Pumpeneinheit 20 auf gegenüberliegenden Seiten des Grundträgers 10 angeordnet sind, ist es mit besonderem Vorteil möglich, das in den Dosierkammern befindliche Schmieröl in Richtung des Hin- und Herbewegens der Kolben in fast geradliniger oder nur leicht schräger Kanalführung im Grundträger 10 an die Schmierölausgabeanschlüsse 42 auszugeben. Damit ist unter anderem eine besondere Dynamik der Schmierölausgabe erzielbar und damit mit besonderem Vorteil ein angepasst an den Takt des Dieselmotorkolbens abgestimmtes, zeitlich präzises Ausgeben von Schmieröl möglich. Weiterhin trägt besagtes Gegenüberliegen mit Vorteil zur Kompaktheit der Vorrichtung bei.

Auch dadurch, dass die beiden Hydraulikanschlüsse 52 und 54 sozusagen über Eck an zueinander senkrecht stehenden Seiten des Grundträgers 10 angeordnet sind, wird eine besonders kompakte Ausbildung der Vorrichtung erzielt. Entsprechendes trifft auch für die Steuereinheit 30 zu, die nicht an ein und derselben Seite wie die Pumpeneinheit 20 am Grundträger 10 angebracht ist, sondern ähnlich wie die Hydraulikanschlüsse 52 und 54 sind die Pumpeneinheit 20 und Steuereinheit 30 an zwei zueinander senkrecht stehenden Seiten des Grundträgers 10 angeordnet.

Wird wiederum bezugnehmend auf die Draufsicht der Figur 1 der Grundträger 10 von der Seite des zweiten Hydraulikanschlusses 54 und der Steuereinheit 30 aus an einer Einbauumgebung, beispielsweise die in der Figur 1 angedeuteten Wand befestigt, so kann mit besonderem Vorteil die gesamte Vorrichtung dadurch getauscht werden, dass die Befestigungen gelöst werden und die Vorrichtung sozusagen nach rechts hin entnommen wird und eine entsprechend neue Vorrichtung eingesetzt wird. Dabei ist von besonderem Vorteil, dass die beiden Doppelwandhydraulikrohre zwar von der Vorrichtung gelöst werden müssen, aber keine weitere aufwändige Demontage, beispielsweise von Halteschellen für besagte Doppelwandhydraulikrohre notwendig ist.

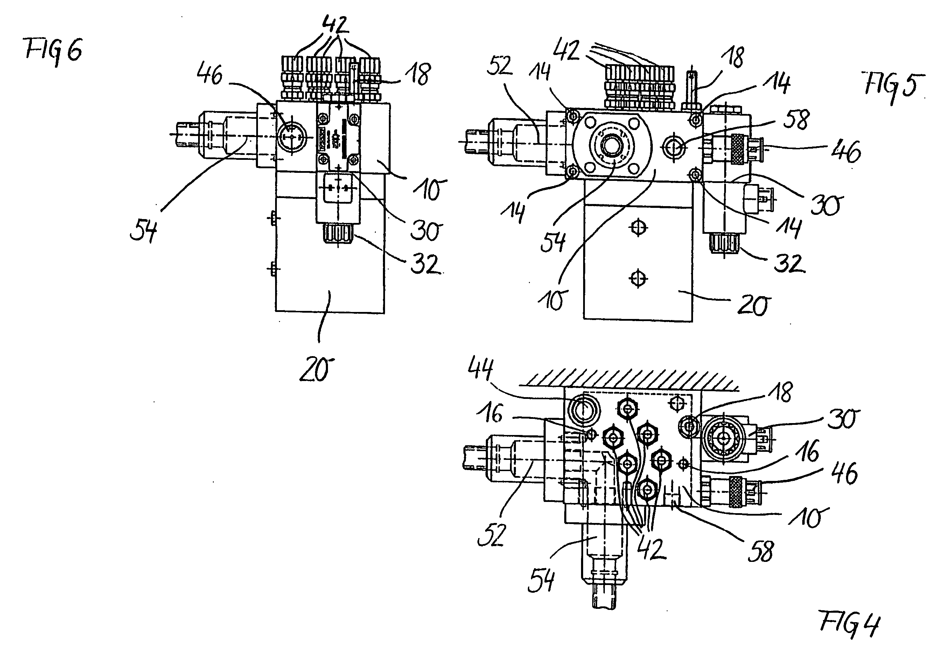

Die Figuren 4 bis 6 zeigen eine zweite Vorrichtung zum dosierten Ausgeben von Schmieröl. Dabei werden hinsichtlich der zweiten Vorrichtung im Folgenden lediglich ihre Unterschiede zu der ersten Vorrichtung gemäß den Figuren 1 bis 3 erläutert. Ansonsten gilt das vorausgehend zu der ersten Vorrichtung der Figuren 1 bis 3 Beschriebene für die zweite Vorrichtung der Figuren 4 bis 6 entsprechend. Bauelemente der zweiten Vorrichtung, die hinsichtlich der ersten Vorrichtung eine Entsprechung aufweisen, sind dabei mit gleichen Bezugszeichennummern bezeichnet.

Anders als bei der ersten Vorrichtung der Figuren 1 bis 3 ist bei der zweiten Vorrichtung die Steuereinheit 30 auf die Seite des Anschlusses des Druckschalters 46 verlagert, wobei die bei der ersten Vorrichtung dort angeordnete Absperrspindel 18 und der Schmierölzuführanschluss 44 bei der zweiten Vorrichtung auf die Seite der Schmierölausgabeanschlüsse 42 verschoben sind. Weiterhin ist der bei der ersten Vorrichtung auf der Seite des ersten Hydraulikanschlusses 52 angeordnet Anschluss 58 zum Abführen von Hydrauliköl zu einem Tank nunmehr bei der zweiten Vorrichtung auf die Seite des zweiten Hydraulikanschlusses 54 angeordnet.

Bei der zweiten Vorrichtung ist der Grundträger 10 anders als bei der ersten Vorrichtung zur Pumpeneinheit 20 hin mit den Grundträger 10 durchdringende Gewindebohrungen 16 ausgebildet, durch die hindurch die Pumpeneinheit 20 vom Grundträger 10, beispielsweise bei einem Demontieren der Pumpeneinheit 20 vom Grundträger 10 nach unten hin abgedrückt werden kann. Derartige Gewindebohrungen 16 können natürlich aber auch bei der ersten Vorrichtung entsprechend vorgesehen sein. Weiterhin sind bei der zweiten Vorrichtung die bei der ersten Vorrichtung der Übersichtlichkeit halber einfach nicht dargestellten Durchdringungen 14 zum Befestigen der Vorrichtung an der Wand mit eingezeichnet.

## Patentansprüche

1. Vorrichtung zum dosierten Ausgeben einer Schmierflüssigkeit, beinhaltend folgende Merkmale:
- Ein Grundträger (10) mit Kanälen für eine Schmier- und eine Hydraulikflüssigkeit und mit Anschlüssen (42, 44, 52, 54) für Leitungen der Flüssigkeiten,
- eine Pumpeneinheit (20) mit einem hin- und her bewegbaren Kolbensystem für das dosierte Ausgeben der Schmierflüssigkeit,
- eine Steuereinheit (30) zur Bewegungssteuerung des Kolbensystems mittels der Hydraulikflüssigkeit,
- die Anschlüsse (42) für ein dosiertes Ausgeben der Schmierflüssigkeit sind auf einer Seite des Grundträgers (10) angeordnet, die der Seite gegenüberliegt, an der die Pumpeneinheit (20) mit darauf senkrecht stehender Hin- und Herbewegungsrichtung ihres Kolbensystems befestigt ist, und
- die Steuereinheit (30) an einer Seite des Grundträgers (10) angeordnet ist, die zur Befestigungsseite der Pumpeneinheit (20) in etwa senkrecht stehend ausgebildet ist.

2. Vorrichtung nach Anspruch 1, wobei Anschlüsse für Leitungen der Hydraulikflüssigkeit an einer Seite des Grundträgers angeordnet sind, die zur Befestigungsseite der Pumpeneinheit in etwa senkrecht stehend ausgebildet ist.

3. Vorrichtung nach einem der Ansprüche 1 oder 2, wobei die wenigstens zwei Anschlüsse für Leitungen der Hydraulikflüssigkeit über Eck an zwei zueinander senkrecht stehenden Seiten des Grundträgers angeordnet sind.

4. Vorrichtung nach einem der Ansprüche 1 bis 3, wobei die Kanäle für das dosierte Ausgeben der Schmierflüssigkeit im Grundträger von der Seite, an der die Pumpeneinheit befestigt ist, hin zu der Seite mit den Ausgabeanschlüssen verlaufend angeordnet sind.

5. Vorrichtung nach einem der Ansprüche 1 bis 4, wobei der Grundträger platten- oder quaderförmig ausgebildet ist.

6. Vorrichtung nach einem der Ansprüche 1 bis 5, wobei die Steuereinheit ein Umsteuerventil, insbesondere ein 4/2-Wege-Richtungssteuerventil umfasst.

7. Vorrichtung nach einem der Ansprüche 1 bis 6, wobei ein Kolbensystem der Pumpeneinheit einen Arbeitskolben und mehrere Dosierkolben umfasst und/oder die Vorrichtung derart ausgebildet ist, dass das Hin- und Herbewegen eines Kolbensystems der Pumpeneinheit in beide Richtungen durch ein Druckbeaufschlagen mittels der Hydraulikflüssigkeit bewirkt wird.

8. Vorrichtung nach einem der Ansprüche 1 bis 7, wobei die Steuereinheit eine Betätigungseinrichtung umfasst, mit der die Steuereinheit auch manuell betätigbar oder auslösbar ist.

9. Vorrichtung nach einem der Ansprüche 1 bis 8, wobei der Grundträger eine Anschlussmöglichkeit für einen Sensor, insbesondere zum Erfassen eines Druck-Zeit-Verlaufs, an wenigstens einer der Ausgaben für die Schmierflüssigkeit umfasst.

10. Vorrichtung nach einem der Ansprüche 1 bis 9, wobei die Vorrichtung, insbesondere der Grundträger für ein Hindurchleiten einer Leckageflüssigkeit ausgebildet ist, und die Vorrichtung insbesondere Mittel für eine zentrale Leckageüberwachung umfasst.

11. Vorrichtung nach einem der Ansprüche 1 bis 10, wobei die Anschlüsse für Leitungen der Hydraulikflüssigkeit zum Anschluss doppelwandig ausgebildeter Leitungen gestaltet sind, und das Hindurchleiten einer Leckageflüssigkeit insbesondere den Bereich zwischen den beiden Wandungen der doppelwandig ausgebildeten Hydraulikleitungen betrifft.

12. Vorrichtung nach einem der Ansprüche 1 bis 11, wobei der Grundträger wenigstens eine zur Pumpeneinheit hin den Grundträger durchdringende Öffnung umfasst, durch die hindurch ein Lösen der Pumpeneinheit vom Grundträger unterstützbar ist, und die Öffnung insbesondere als eine Gewindebohrung ausgebildet ist.

## Claims

1. Device for the metered discharge of a lubricating fluid, comprising the following features:
- a base support (10) having ducts for a lubricating fluid and a hydraulic fluid and having ports (42, 44, 52, 54) for lines for the fluids,
- a pump unit (20) having a piston system, which is movable in a reciprocating manner, for the metered discharge of the lubricating fluid,
- a control unit (30) for controlling the movement of the piston system by means of the hydraulic fluid,
- the ports (42) for a metered discharge of the lubricating fluid are arranged on a side of the base support (10) which is situated opposite the side to which the pump unit (20) is fastened, with the reciprocating movement direction of the piston system of said pump unit perpendicular to said side, and
- the control unit (30) is arranged on a side of the base support (10) which is formed so as to stand approximately perpendicular to the fastening side of the pump unit (20).

2. Device according to Claim 1, wherein ports for lines for the hydraulic fluid are arranged on a side of the base support which is formed so as to stand approximately perpendicular to the fastening side of the pump unit.

3. Device according to either of Claims 1 and 2, wherein the at least two ports for lines for the hydraulic fluid are arranged across a corner on two mutually perpendicular sides of the base support.

4. Device according to one of Claims 1 to 3, wherein the ducts for the metered discharge of the lubricating fluid are arranged in the base support so as to run from the side to which the pump unit is fastened to the side with the discharge ports.

5. Device according to one of Claims 1 to 4, wherein the base support is of slab-shaped or cuboidal design.

6. Device according to one of Claims 1 to 5, wherein the control unit has a reversing valve, in particular a 4/2 directional control valve.

7. Device according to one of Claims 1 to 6, wherein a piston system of the pump unit comprises a working piston and a plurality of dosing pistons and/or the device is designed such that the reciprocating movement of a piston system of the pump unit is effected in both directions by a pressurization by means of the hydraulic liquid.

8. Device according to one of Claims 1 to 7, wherein the control unit comprises an actuating device by means of which the control unit can also be actuated or triggered manually.

9. Device according to one of Claims 1 to 8, wherein the base support comprises a connection facility for a sensor, in particular for detecting a pressure-time profile, at at least one of the outlets for the lubricating fluid.

10. Device according to one of Claims 1 to 9, wherein the device, in particular the base support, is designed for conducting a leakage fluid, and the device comprises in particular means for central leakage monitoring.

11. Device according to one of Claims 1 to 10, wherein the ports for lines for the hydraulic fluid are designed for the connection of lines of double-walled design, and the conduction of a leakage fluid is performed in particular by the region between the two walls of the hydraulic lines of double-walled design.

12. Device according to one of Claims 1 to 11, wherein the base support comprises at least one opening which extends through the base support towards the pump unit, through which opening a release of the pump unit from the base support can be assisted, and the opening is formed in particular as a threaded bore.

## Revendications

1. Dispositif de distribution dosée d'un liquide lubrifiant, contenant les caractéristiques suivantes :
- un support de base (10) avec des canaux pour un liquide lubrifiant et un liquide hydraulique et avec des raccords (42, 44, 52, 54) pour des conduites des liquides,
- une unité de pompe (20) avec un système de piston déplaçable en va-et-vient pour la distribution dosée du liquide lubrifiant,
- une unité de commande (30) pour la commande du mouvement du système de piston au moyen du liquide hydraulique,
- les raccords (42) pour une distribution dosée du liquide lubrifiant sont disposés d'un côté du support de base (10) opposé au côté sur lequel est fixée l'unité de pompe (20) avec la direction de mouvement de va-et-vient de son système de piston orientée à angle droit par rapport à celle-ci, et
- l'unité de commande (30) est disposée d'un côté du support de base (10) qui est réalisé de manière approximativement perpendiculaire au côté de fixation de l'unité de pompe (20).

2. Dispositif selon la revendication 1, dans lequel des raccords pour des conduites de liquide hydraulique sont disposés d'un côté du support de base qui est réalisé de manière approximativement perpendiculaire au côté de fixation de l'unité de pompe.

3. Dispositif selon l'une quelconque des revendications 1 ou 2, dans lequel les au moins deux raccords pour des conduites de liquide hydraulique sont disposés sur un coin au niveau de deux côtés perpendiculaires l'un à l'autre du support de base.

4. Dispositif selon l'une quelconque des revendications 1 à 3, dans lequel les canaux pour la distribution dosée du liquide lubrifiant dans le support de base du côté sur lequel est fixée l'unité de pompe sont disposés de manière à s'étendre vers le côté ayant les raccords de distribution.

5. Dispositif selon l'une quelconque des revendications 1 à 4, dans lequel le support de base est réalisé sous forme de plaque ou de parallélépipède.

6. Dispositif selon l'une quelconque des revendications 1 à 5, l'unité de commande comprenant une soupape d'inversion, notamment une soupape de commande directionnelle à 4/2 voies.

7. Dispositif selon l'une quelconque des revendications 1 à 6, dans lequel un système de piston de l'unité de pompe comprend un piston de travail et plusieurs pistons de dosage, et/ou le dispositif est réalisé de telle sorte que le mouvement de va-et-vient d'un système de piston de l'unité de pompe dans les deux directions soit provoqué par une sollicitation en pression au moyen du liquide hydraulique.

8. Dispositif selon l'une quelconque des revendications 1 à 7, dans lequel l'unité de commande comprend un dispositif d'actionnement, avec lequel l'unité de commande peut être actionnée ou déclenchée de manière manuelle.

9. Dispositif selon l'une quelconque des revendications 1 à 8, dans lequel le support de base comprend une possibilité de raccord pour un capteur, en particulier pour détecter une allure de la pression en fonction du temps, au niveau d'au moins l'une des sorties du liquide de lubrifiant.

10. Dispositif selon l'une quelconque des revendications 1 à 9, dans lequel le dispositif, notamment le support de base, est réalisé pour la conduite d'un liquide de fuite, et le dispositif comprend en particulier des moyens pour une surveillance centrale des fuites.

11. Dispositif selon l'une quelconque des revendications 1 à 10, dans lequel les raccords pour des conduites du liquide hydraulique sont configurés pour le raccord de conduites à double paroi, et la conduite d'un liquide de fuite concerne en particulier la région entre les deux parois des conduites hydrauliques à double paroi.

12. Dispositif selon l'une quelconque des revendications 1 à 11, dans lequel le support de base comprend au moins une ouverture traversant le support de base vers l'unité de pompe, grâce à laquelle un desserrage de l'unité de pompe du support de base peut être facilité, et l'ouverture est réalisée notamment sous forme d'alésage fileté.
